# EUROPÄISCHE PATENTSCHRIFT

(11) **EP 2 386 786 B1**
(45) Veröffentlichungstag und Bekanntmachung des Hinweises auf die Patenterteilung: **19.11.2014**
(21) Anmeldenummer: 11156391.2
(22) Anmeldetag: 01.03.2011
(51) Int. Cl.: F16L 3/24, F16L 3/04, F24D 3/14

(54) **Rohrhalter für Fussbodenheizungsaufbau**
Tube holder for heating floor construction
Support de tuyau pour plancher chauffant

(30) Priorität: 12.05.2010 DE 102010020447
(43) Veröffentlichungstag der Anmeldung: 16.11.2011
(73) Patentinhaber: VIEGA GmbH & Co. KG, 57439 Attendorn (DE)
(72) Erfinder: Meißner, Kai, 57223, Kreuztal (DE); Schneider, Andreas, 57413, Finnentrop (DE); Pilmeier, Reinhard, 94354, Haselbach (DE)
(74) Vertreter: Cohausz & Florack

(56) Entgegenhaltungen:
- EP-A1- 0 571 286
- EP-A1- 0 637 720
- WO-A2-2009/062268
- DE-U1- 29 805 158
- DE-U1-202005 009 253

## Beschreibung

Die Erfindung betrifft einen Rohrhalter zur Fixierung eines Rohres gemäß Oberbegriff von Patentanspruch 1. Die Erfindung betrifft darüber hinaus einen Rohrhalter zur Fixierung eines Rohres gemäß Oberbegriff von Patentanspruch 2. Ferner betrifft die Erfindung eine Verbindungsanordnung für den Installationsbereich gemäß Oberbegriff von Patentanspruch 16. Ein entsprechender Rohrhalter und eine entsprechende Verbindungsanordnung sind aus der DE 298 05 158 U1 bekannt.

Aus dem Stand der Technik sind Fußbodenheizungssysteme bekannt, die wie folgt aufgebaut sind: in der Regel wird auf einen tragfähigen Untergrund, der mit einer Dämmplatte versehen sein kann, eine sogenannte Klimaplatte aufgelegt, die als Halterung für die Wärmetauscherrohre der Fußbodenheizung dient. Die Wärmetauscherrohre werden dazu zwischen in einer Matrix angeordneten Vorsprüngen, im Folgenden als Noppen bezeichnet, auf den Klimaplatten verlegt, wobei die Noppen die Rohre so weit fixieren sollen, dass sich diese bei der Montage des Fußbodenheizungssystems und dem Gießen des Estrichs möglichst nicht in horizontaler und vertikaler Richtung verschieben. Ein solcher Fußbodenheizungsaufbau mit Klimaplatten ist beispielsweise aus der DE 20 2005 009 253 U1 bekannt.

Bei der Installation der Wärmetauscherrohre kann der Fall auftreten, dass das Wärmetauscherrohr bereichsweise derart verlegt werden muss, dass es aufgrund eines zu großen Abstands zwischen den benachbarten Noppen durch diese nicht oder zumindest nicht in ausreichendem Maße gehalten wird. Dieser Fall tritt beispielsweise bei Klimaplatten mit matrixförmig angeordneten Noppen dann auf, wenn ein Wärmetauscherrohr zumindest abschnittsweise diagonal verlegt werden soll. Bei einer Diagonalverlegung ist der Abstand zwischen benachbarten Noppen in der Regel so groß, dass das jeweilige Wärmetauscherrohr beim Gießen des Estrichs verrutschen oder aufschwimmen kann.

Abhilfe schaffen spezielle Rohrhalter, wie sie eingangs definiert wurden und wie sie beispielsweise in der DE 298 05 158 U1 beschrieben sind. Diese Rohrhalter weisen zwei elastische Schlaufen auf, mit denen sie an benachbarten Noppen befestigt werden, sowie einen stegförmigen Verbindungsabschnitt mit einem Halteelement zum Niederhalten des Rohres.

Die bekannten Rohrhalter sind aber relativ schwer zu montieren, da die Halteschlaufen einzeln von Hand über die Noppen gestülpt werden müssen, wenn das Wärmetauscherrohr an der gewünschten Stelle verlegt ist. Im Übrigen sind die Rohrhalter gemäß Stand der Technik nur für einen ganz bestimmten Abstand zwischen den benachbarten Noppen ausgelegt, so dass in dem Fall, dass die Klimaplatte eine Matrix mit einem verringerten Noppenabstand aufweist, die Rohrhalter das jeweilige Wärmetauscherrohr nicht ausreichend fixieren. Im Falle eines vergrößerten Noppenabstands sind die Rohrhalter entweder überhaupt nicht zu montieren oder führen dazu, dass sich die Klimaplatte aufgrund der hohen Zugspannung zwischen zwei benachbarten Noppen durchbiegt. Dies kann wiederum zu Beschädigungen an der Klimaplatte, den Wärmetauscherrohren oder im Laufe der Zeit sogar am Fußbodenaufbau führen. Bei zu großer Zugbelastung können die Rohrhalter sogar reißen, insbesondere auch dann, wenn diese durch den frischen Estrich zusätzlich belastet werden.

Es ist daher die Aufgabe der vorliegenden Erfindung, einen Rohrhalter und eine entsprechende Verbindungsanordnung zu schaffen, womit die Montage eines Fußbodenheizungsaufbaus vereinfacht wird.

Die zuvor hergeleitete und aufgezeigte Aufgabe wird gemäß einer ersten Lehre der vorliegenden Erfindung durch einen Rohrhalter mit den Merkmalen von Patentanspruch 1 gelöst. Die Aufgabe wird also bei einem Rohrhalter zur Fixierung eines Rohres, insbesondere Wärmetauscherrohres, auf einer oberseitig hervorstehende Noppen aufweisenden Platte, insbesondere Klimaplatte, mit zwei horizontal voneinander beabstandeten Anlageabschnitten mit Anlageflächen zur seitlichen Anlage an mindestens einer Noppe der Platte, mit mindestens einem Verbindungsabschnitt, der die Anlageabschnitte miteinander verbindet, und mit mindestens einem Halteabschnitt, der ein Halteelement zum Niederhalten des Rohres aufweist, dadurch gelöst, dass mindestens einer der Anlageabschnitte und/oder der mindestens eine Verbindungsabschnitt oder mindestens einer der Verbindungsabschnitte mindestens einen lokal begrenzten Dehnungsabschnitt aufweist, der eine Abstandsvergrößerung zwischen den Anlageabschnitten gegenüber einem unbelasteten Zustand zulässt, in dem das Material des Dehnungsabschnitts eine höhere Elastizität als in den dazu jeweils benachbarten Abschnitten aufweist und der so ausgebildet ist, dass er sich im Vergleich zu jeweils benachbarten Abschnitten leichter dehnen lässt oder überhaupt eine Dehnung zulässt, so dass der Abstand zwischen den Anlageabschnitten und/oder Verbindungsabschnitten auf unterschiedliche Noppenabstände und/oder Noppengrößen angepasst werden kann.

Die Aufgabe wird auch gemäß einer zweiten Lehre der vorliegenden Erfindung durch einen Rohrhalter mit den Merkmalen von Patentanspruch 2 gelöst. Die Aufgabe wird also bei einem Rohrhalter, insbesondere wie zuvor beschriebenen Rohrhalter, zur Fixierung eines Rohres, insbesondere Wärmetauscherrohres, auf einer oberseitig hervorstehende Noppen aufweisenden Platte, insbesondere Klimaplatte, mit zwei horizontal voneinander beabstandeten Anlageabschnitten mit Anlageflächen zur seitlichen Anlage an mindestens einer Noppe der Platte und mit mindestens einem Halteabschnitt, der ein Halteelement zum Niederhalten des Rohres aufweist, dadurch gelöst, dass der Rohrhalter mindestens zwei Verbindungsabschnitte aufweist, die die Anlageabschnitte miteinander verbinden, und mindestens einer der Anlageabschnitte und/oder mindestens einer der Verbindungsabschnitte mindestens einen lokal begrenzten Dehnungsabschnitt aufweist, der eine Abstandsvergrößerung zwischen den Verbindungsabschnitten gegenüber einem unbelasteten Zustand zulässt, in dem das Material des Dehnungsabschnitts eine höhere Elastizität als in den dazu jeweils benachbarten Abschnitten aufweist und der so ausgebildet ist, dass er sich im Vergleich zu jeweils benachbarten Abschnitten leichter dehnen lässt oder überhaupt eine Dehnung zulässt, so dass der Abstand zwischen den Anlageabschnitten und/oder Verbindungsabschnitten auf unterschiedliche Noppenabstände und/oder Noppengrößen angepasst werden kann.

Ein solcher Dehnungsabschnitt ist ein lokal begrenzter Abschnitt, der so ausgebildet ist, dass er sich im Vergleich zu jeweils benachbarten Abschnitten leichter dehnen läßt oder überhaupt eine Dehnung zulässt. Auf diese Weise kann der Abstand zwischen den Anlageabschnitten und/oder Verbindungsabschnitten ohne weiteres auf unterschiedliche Noppenabstände und/oder Noppengrößen (gemeint sind die Durchmesser) angepasst werden. Ein solcher Rohrhalter, der erfindungsgemäß vorzugsweise einstückig ausgebildet ist, ist damit auf besonders einfache Weise zu installieren und kann bei verschiedenen Klimaplatten mit unterschiedlichen Noppenabständen oder -größen verwendet werden. Eine Beschädigung des Rohrhalters oder gar der Klimaplatte oder Wärmetauscherrohre wird dadurch vermieden, dass ein lokal begranzter Abschnitt, der Dehnungsabschnitt, bewusst von der Form und/oder dem Material dafür ausgelegt ist, um einen gewissen Grad gedehnt zu werden. Erfindungsgemäß ist der Dehnungsabschnitt dabei so ausgebildet, dass dieser um mindestens 0,5%, bevorzugt um mindestens 1%, besonders bevorzugt um mindestens 5%, bezogen auf seine Länge im ungedehnten Zustand, dehnbar ist. Die dazu benachbarten Abschnitte, insbesondere auch die mit dem Halteelement versehenen Halteabschnitte, sind zwangläufig weniger dehnbar oder überhaupt nicht dehnbar.

Grundsätzlich sind verschiedene Varianten des Rohrhalters, bei denen der oder die Halteabschnitte auf unterschiedliche Weise zu dem oder den Verbindungsabschnitten angeordnet sein können, denkbar. Gemäß einer Variante liegen der oder die Halteabschnitte bzw. das oder die Halteelemente in einem Bereich zwischen den beiden Anlageabschnitten. In diesem Fall ist insbesondere an mindestens einem der Verbindungsabschnitte ein Halteabschnitt mit einem Halteelement zum Niederhalten des Rohres ausgebildet. Diese Variante ist dazu ausgelegt, den Rohrhalter um zwei benachbarte Noppen zu legen. Gemäß einer anderen Variante können der oder die Halteabschnitte bzw. das oder die Halteelemente auch in einem Bereich angeordnet sein, der sich nicht zwischen den Anlageabschnitten befindet. In diesem Fall grenzt insbesondere mindestens ein Halteabschnitt mit einem Halteelement an einen der Anlageabschnitte an. Der mindestens eine Verbindungsabschnitt erstreckt sich dann auf der anderen Seite dieses Anlageabschnitts von diesem Anlageabschnitt zu dem gegenüberliegenden Anlageabschnitt. Diese Variante ist dafür ausgelegt, dass der Rohrhalter um nur eine einzelne Noppe gelegt wird.

Um den Komfort bei der Installation weiter zu erhöhen, sind gemäß einer Ausgestaltung des erfindungsgemäßen Rohrhalters zwei Verbindungsabschnitte vorgesehen, die horizontal voneinander beabstandet sind und jeweils die Anlageabschnitte miteinander verbinden. Ein solcher Rohrhalter weist nicht mehr zwei einzelne Schlaufen auf, die jeweils nacheinander um einen zugehörigen Noppen gelegt werden müssen, sondern durch das Vorsehen zweier Verbindungsabschnitte kann der Rohrhalter ringförmig ausgebildet sein, wodurch er mit einem Handgriff ohne weiteres gleichzeitig über eine Noppe oder über zwei benachbarte Noppen gelegt werden kann. Bei einem ausreichend steifen Material kann der Monteur dies sogar ohne weiteres mit dem Fuß bewerkstelligen. Vorteilhaft ist es, wenn der Rohrhalter zumindest abschnittsweise, insbesondere in den zu den Dehnungsabschnitten benachbarten Nicht-Dehnungsabschnitten, durchaus aber auch in den Dehnungsabschnitten, aus Kunststoff besteht, wobei sich aufgrund der Steifigkeit Polyethylen, Polypropylen oder Polyvinylchlorid als besonders geeignet erwiesen haben.

Weiter kann der Komfort dadurch erhöht werden, dass eine gute Zentrierbarkeit und Eindrückbarkeit beim Montieren des Rohrhalters per Fuß begünstigt wird, beispielsweise dadurch, dass große Einführschrägen bzw. Einführbereiche am Rohrhalter, insbesondere an den Anlageabschnitten, vorgesehen werden. Diese Einführschrägen bzw. -bereiche können als Vorsprünge ausgebildet werden, wie diese im weiteren noch beschrieben werden.

Wie gesagt kann der Rohrhalter erfindungsgemäß zumindest abschnittsweise, insbesondere in einem von zwei Anlageabschnitten und zwei Verbindungsabschnitten gebildeten Teil, ringförmig ausgebildet sein. In diesem Fall ist vorgesehen, dass der mindestens eine Dehnungsabschnitt eine Vergrößerung der vom Rohrhalter umfassten Fläche gegenüber einem unbelasteten Zustand zulässt. Mit der vom Rohrhalter umfassten Fläche ist der Ringquerschnitt gemeint, durch dessen Vergrößerung der Rohrhalter an unterschiedliche Abstände zwischen zwei benachbarten Noppen oder, wenn dieser nur um eine Noppe gelegt werden soll, an unterschiedliche Noppengrößen bzw. Noppendurchmesser angepasst werden kann.

Erfindungsgemäß weist das Material in dem Dehnungsabschnitt eine erhöhte Elastizität auf. Erhöht bedeutet dabei, dass die Elastizität im Dehnungsabschnitt höher als in den dazu jeweils benachbarten Abschnitten ist. Dies gilt sowohl für einen Dehnungsabschnitt als Bestandteil eines Anlageabschnitts als auch für einen Dehnungsabschnitt als Bestandteil eines Verbindungsabschnitts. Zusätzlich kann der Dehnungsabschnitt auch eine höhere plastische Verformbarkeit als die benachbarten Abschnitte haben.

Beides, sowohl die erhöhte plastische Verformbarkeit als auch die erhöhte Elastizität, kann beispielsweise durch Verwendung unterschiedlicher Materialien, insbesondere unterschiedlicher Kunststoffe, erreicht werden. Dabei ist es denkbar, dass der Dehnungsabschnitt aus einem weichen und/oder dehnbaren Material, beispielsweise einem gummiartigen Material, und die benachbarten und gegebenenfalls auch übrigen Abschnitte aus einem relativ dazu sehr viel steiferen Material, beispielsweise Polyethylen, Polypropylen oder Polyvinylchlorid, bestehen.

Es ist auch denkbar, dass zur Erlangung der Dehnungseigenschaften des Dehnungsabschnitts dieser zusätzlich oder alternativ gegenüber den benachbarten Abschnitten eine andere Form aufweist. Gemäß einer Ausgestaltung des erfindungsgemäßen Rohrhalters ist daher vorgesehen, dass der Dehnungsabschnitt durch eine Materialschwächung im Bereich des Dehnungsabschnitts und/oder Materialversteifung im Bereich benachbart zum Dehnungsabschnitt gebildet wird. Eine Materialschwächung kann beispielsweise durch eine Querschnittsreduzierung (gegenüber benachbarten Abschnitten verringerte Querschnittsfläche) erreicht werden. Im Sinne der Erfindung wird darunter jegliche Wegnahme von Material verstanden, also nicht nur ein dünnerer Querschnitt, sondern auch ein Bereich mit einer Perforierung oder Aussparungen. Eine Materialversteifung kann beispielsweise durch eine Querschnittsvergrößerung (gegenüber benachbarten Abschnitten vergrößerte Querschnittsfläche), beispielsweise durch einen dickeren Querschnitt oder separate Versteifungen, die auch aus einem anderen Material als der Dehnungsabschnitt oder die benachbarten Abschnitte bestehen können, erreicht werden.

Als besonders geeignet hat sich erwiesen, wenn gemäß einer weiteren Ausgestaltung der Dehnungsabschnitt des erfindungsgemäßen Rohrhalters zumindest abschnittsweise einen in vertikaler Richtung oder horizontaler Richtung wellen- oder zickzackförmigen Verlauf hat. Ein solchermaßen ausgestalteter Dehnungsabschnitt kann ohne weiteres nach dem Ziehharmonika-Prinzip gedehnt werden, womit sich der Abstand zwischen den Anlage- und/oder Verbindungsabschnitten ohne weiteres vergrößern läßt.

Bei dem erfindungsgemäßen Rohrhalter liegt gemäß einer weiteren Ausgestaltung der Dehnungsabschnitt zwischen einem der Anlageabschnitte und einem der Halteabschnitte bzw. Halteelemente. Insbesondere ist zwischen jedem Anlageabschnitt und jedem Halteabschnitt bzw. -element ein Dehnungsabschnitt der zuvor beschriebenen Art angeordnet. Dabei hat sich als besonders einfach zu handhaben ein Rohrhalter erwiesen, der an zwei horizontal gegenüberliegenden Enden je einen Anlageabschnitt aufweist, wobei die Anlageabschnitte durch zwei Verbindungsabschnitte miteinander verbunden sind, wobei jeder Verbindungsabschnitt auf der Hälfte zwischen den Anlageabschnitten jeweils ein Halteelement, d.h. ein Halteabschnitt, aufweist und wobei zwischen jedem Anlageabschnitt und jedem Halteelement ein Dehnungsabschnitt vorgesehen ist.

Gemäß noch einer weiteren Ausgestaltung des erfindungsgemäßen Rohrhalters wird der Dehnungsabschnitt von einem der Anlageabschnitte gebildet oder bildet zumindest einen Teil des Anlageabschnitts. Insbesondere bildet dabei jeder Anlageabschnitt einen Dehnungsabschnitt bzw. jeder Anlageabschnitt weist einen solchen Dehnungsabschnitt auf. Auch auf diese Weise läßt sich der Abstand zwischen den Anlage- und/oder Verbindungsabschnitten ohne weiteres vergrößern.

Die Anlageabschnitte können gemäß der vorliegenden Erfindung nach innen (gemeint ist das Innere des Rohrhalters) weisende Vorsprünge aufweisen, die insbesondere gewölbt sind. Solche Vorsprünge können auch durch einen nach innen weisenden bogenförmigen Verlauf des Materials bzw. der Wand im Bereich des jeweiligen Anlageabschnitts gebildet werden. Ein solcher Vorsprung kann rastend mit Hinterschnitten, die häufig am oberen Ende der Noppen vorgesehen sind, zusammenwirken. Auf diese Weise wird die Stabilität einer entsprechenden Verbindungsanordnung erhöht.

Gemäß wiederum einer weiteren Ausgestaltung des erfindungsgemäßen Rohrhalters weist der mindestens eine Verbindungsabschnitt im Bereich des Halteelements eine Querschnittsversteifung, insbesondere eine horizontale Querschnittsvergrößerung, auf. Die Querschnittsversteifung bzw. Querschnittsvergrößerung sorgt für eine optimale Anlage eines darunter angeordneten Rohres und bietet einen optimalen Halt. Gleichzeitig wird als Halteabschnitt durch eine solche Querschnittsversteifung auch ein wenig oder nicht dehnbarer Bereich geschaffen, wodurch zwangsläufig der dazu benachbarte Bereich, insbesondere ein dazu benachbarter Dehnungsabschnitt, eine erhöhte Dehnungsfähigkeit und/oder Elastizität erhält.

Gemäß noch einer weiteren Ausgestaltung des erfindungsgemäßen Rohrhalters ist vorgesehen, dass der mindestens eine Halteabschnitt im Bereich des Halteelements eine zur Unterseite des Rohrhalters offene Aussparung zur Aufnahme des Rohres aufweist, die sich insbesondere zur Oberseite des Rohrhalters hin allmählich verengt, wobei die Aussparung an der Oberseite des Rohrhalters vorzugsweise einen abgerundeten Abschluss hat. Ein sich allmählich verengender Verlauf bedeutet, dass die Ränder zu beiden Seiten der Aussparung einen schrägen Verlauf haben bzw. aufeinander zu laufen. An der Stelle, an der die Ränder der Aussparung aufeinander treffen, ist dann vorzugsweise der abgerundete Abschluss der Aussparung vorgesehen. Die Form des abgerundeten Abschlusses ist dabei vorzugsweise an den üblichen Außendurchmesser eines Rohres, beispielsweise Wärmetauscherrohres, angepasst. Die schräg verlaufenden Ränder der Aussparung haben den Vorteil, dass die Montage noch weiter vereinfacht wird und besonders einfach auch mit dem Fuß möglich ist. Das Rohr zentriert sich dabei automatisch durch die schrägen Ränder, die auf den insbesondere abgerundeten Abschluss zulaufen. Durch diese gute Zentrierbarkeit wird die Montage des Rohrhalters mit dem Fuß ermöglicht, wobei das Rohr sozusagen "gefangen" werden kann. Die Schrägen erlauben auch die Einhaltung der Normanforderungen hinsichtlich zulässiger horizontaler und vertikaler Abweichungen von der optimalen Lage. Schließlich ist der Rohrhalter durch die Schrägen für verschiedene Rohrdurchmesser geeignet. Vorteilhafterweise ist dazu die maximale Öffnungsweite der Aussparung an der Unterseite des Rohrhalters bzw. Halteabschnitts mindestens um den Faktor 1,2, bevorzugt mindestens um den Faktor 1,5, besonders bevorzugt mindestens um den Faktor 1,8, größer als der Außendurchmesser des Rohres.

Um eine möglichst mittige Zentrierung des Rohres zwischen zwei Noppen zu erreichen, die auch bei zusätzlicher Belastung durch frischen Estrich bestehen bleibt, weist der Rohrhalter gemäß einer weiteren Ausgestaltung einen spiegelsymmetrischen Aufbau auf, wobei sich die Spiegelsymmetrie auf eine durch die zwei Anlageabschnitte verlaufende erste vertikale Spiegelebene und/oder auf eine dazu orthogonal verlaufende zweite vertikale Spiegelebene, die bevorzugt durch die Halteelemente verläuft, bezieht. Ein solcher spiegelsymmetrisch aufgebauter Rohrhalter ist auch sowohl einfach zu installieren als auch herzustellen.

Damit beim Verteilen des frischen Estrichs möglichst keine unerwünschten Hohlräume zwischen Rohrhalter und Platte, insbesondere Klimaplatte, entstehen, ist gemäß einer weiteren Ausgestaltung des erfindungsgemäßen Rohrhalters die Höhe des mindestens einen Verbindungsabschnitts zumindest über einen Teil seiner Länge größer als seine Dicke. Mit der Höhe ist die vertikale Erstreckung und mit der Dicke die Materialstärke in horizontaler Richtung gemeint. Mit anderen Worten ist die Materialstärke im Vergleich zur Höhe relativ klein. Als vorteilhaft hat sich erwiesen, wenn zumindest abschnittsweise das Verhältnis von Höhe zu Dicke mindestens zwei, bevorzugt mindestens vier, besonders bevorzugt mindestens sechs, beträgt. Auf diese Weise wird also eine relativ dünne vertikale Wand gebildet, die aufgrund ihrer geringen Materialstärke die Ausbildung unerwünschter Hohlräume optimal verhindert. Das zuvor Gesagte gilt gleichermaßen auch für die übrigen Abschnitte des Rohrhalters, die auf dieselbe Weise ausgebildet sein können, wie die Verbindungsabschnitte. Insbesondere ist der Rohrhalter dabei, zumindest abschnittsweise, als umlaufendes Band ausgebildet.

Die Aufgabe wird gemäß einer dritten Lehre der vorliegenden Erfindung bei einer Verbindungsanordnung für den Installationsbereich, insbesondere für einen Fußbodenheizungsaufbau, mit einer oberseitig hervorstehende Noppen aufweisenden Platte, insbesondere Klimaplatte, mit einem Rohrhalter, der mindestens eine Noppe, vorzugsweise zwei benachbarte Noppen, umschließt, und mit einem Rohr, insbesondere Wärmetauscherrohr, das zwischen dem Rohrhalter und der Platte angeordnet ist, dadurch gelöst, dass der Rohrhalter wie zuvor beschrieben ausgebildet ist.

Es gibt nun eine Vielzahl von Möglichkeiten, den erfindungsgemäßen Rohrhalter und die erfindungsgemäße Verbindungsanordnung auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Figuren 1a) bis c): verschiedene Ansichten eines ersten Ausführungsbeispiels eines Rohrhalters gemäß der vorliegenden Erfindung,
- Figuren 2a) bis e): Ausführungsbeispiele eines Rohrhalters, die nicht Gegenstand der Erfindung sind und
- Figuren 3a) bis c): verschiedene Ansichten noch eines weiteren Ausführungsbeispiels eines Rohrhalters, das nicht Gegenstand der Erfindung ist.

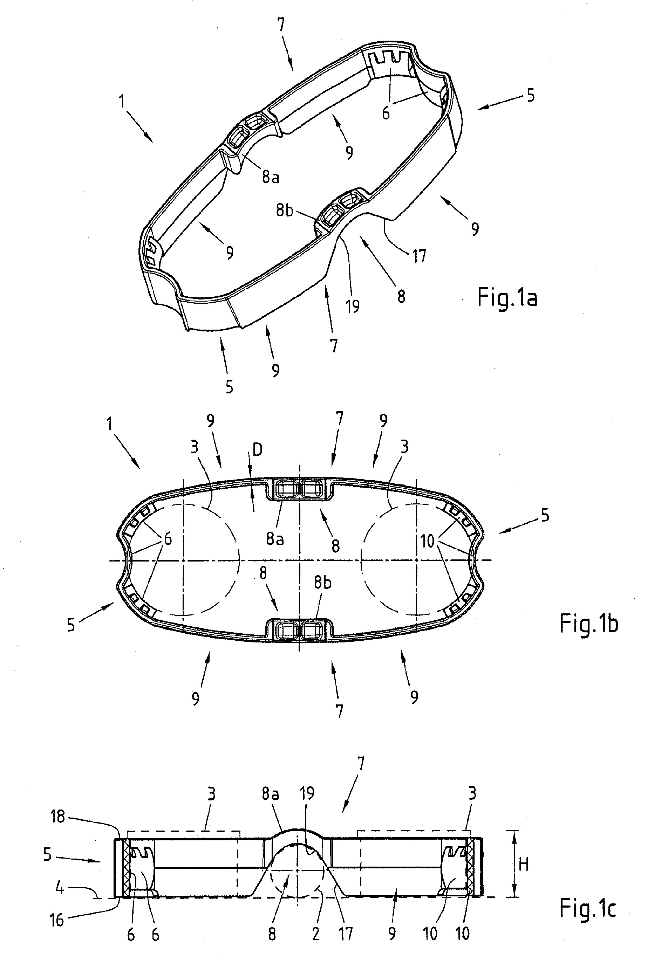

Fig. 1a) zeigt eine perspektivische Ansicht eines Rohrhalters 1 gemäß der vorliegenden Erfindung. Der Rohrhalter 1 dient, wie die Figuren 1b) und c) schematisch zeigen, zur Fixierung eines Rohres 2 (gestrichelt dargestellt), hier eines Wärmetauscherrohres, auf einer oberseitig hervorstehende Noppen 3 (gestrichelt dargestellt) aufweisenden Platte 4 (gestrichelt dargestellt), hier Klimaplatte. Der Rohrhalter 1, der aus Kunststoff besteht und einstückig ausgebildet ist, hat dabei eine Ringform, die eine einfache Montage ermöglicht.

Der Rohrhalter 1 weist zwei horizontal voneinander beabstandete Anlageabschnitte 5 mit jeweils mehreren Anlageflächen 6 zur seitlichen Anlage an benachbarten Noppen 3 der Platte 4 auf.

Ferner weist der Rohrhalter 1 zwei Verbindungsabschnitte 7 auf, die horizontal voneinander beabstandet sind und jeweils die Anlageabschnitte 5 miteinander verbinden, wobei an jedem der Verbindungsabschnitte 7 ein Halteabschnitt 8 mit einem Halteelement 8a,8b zum Niederhalten des Rohres 2 ausgebildet ist.

Die Verbindungsabschnitte 7 weisen jeweils zwei Dehnungsabschnitte 9 auf, die eine Abstandsvergrößerung zwischen den Anlageabschnitten 5 gegenüber einem unbelasteten Zustand zulassen.

Letzteres wird in diesem Ausführungsbeispiel dadurch erreicht, dass in jedem Dehnungsabschnitt 9 das Material eine erhöhte Elastizität aufweist. Außerdem haben die Dehnungsabschnitte 9 einen, hier nach außen, gewölbten Verlauf. Beides führt dazu, dass sich die Dehnungsabschnitte 9 bei einer Zugbelastung strecken und die Anlageabschnitte 5 auseinander bewegt werden können.

Die Dehnungsabschnitte 9 liegen jeweils zwischen einem der Anlageabschnitte 5 und einem der Halteabschnitte 8 bzw. -elemente 8a,8b, wobei zwischen jedem Anlageabschnitt 5 und jedem Halteabschnitt 8 bzw. -element 8a,8b jeweils ein Dehnungsabschnitt 9 angeordnet ist.

Die beiden Anlageabschnitte 5 weisen jeweils drei nach innen weisende Vorsprünge 10 auf, wobei die jeweils äußeren Vorsprünge von einer horizontalen Querschnittsvergrößerung gebildet werden, wobei sich der Querschnitt zur Unterseite 16 und Oberseite 18 des Rohrhalters 1 wieder verringert. Der mittlere der Vorsprünge 10 ist von einem nach innen gebogenen Abschnitt, der eine gleichmäßige Materialstärke aufweist, gebildet.

Wie die Figuren 1a) und b) zeigen, weist jeder Verbindungsabschnitt 7 im Bereich des Halteelements 8 eine Querschnittsversteifung 14 in Form einer horizontalen Querschnittsvergrößerung auf. Die Länge der Querschnittversteifung 14 entspricht dabei, wie in Fig. 1c) zu erkennen ist, in etwa der Breite des Rohres 2. Seitlich der Querschnittsversteifung 14, d.h. seitlich des Halteabschnitts 8, ist die Materialstärke wieder reduziert.

Beide Verbindungsabschnitte 7 weisen im Bereich des Halteelements 8a,8b eine zur Unterseite 16 des Rohrhalters 1 offene Aussparung 17 auf, die sich zur Oberseite 18 des Rohrhalters 1 hin allmählich verengt, also im Wesentlichen V-förmig ausgebildet ist. Die Aussparung hat an der Oberseite 18 des Rohrhalters 1 einen abgerundeten Abschluss.

Wie anhand von Fig. 1b) zu erkennen ist, hat der Rohrhalter 1 einen spiegelsymmetrischen Aufbau, und zwar bezogen auf eine durch die zwei Anlageabschnitte 5 verlaufende erste vertikale Spiegelebene E₁ und bezogen auf eine zur ersten vertikalen Spiegelebene E₁ orthogonal verlaufende zweite vertikale Spiegelebene E₂. Genauer gesagt verläuft die Spiegelebene E₁ mittig durch die die äußeren Enden des Rohrhalters 1 bildenden mittleren Vorsprünge 10 und die Spiegelebene E₂ mittig durch die Halteabschnitte 8 bzw. -elemente 8a,8b.

Fig. 1a) zeigt, dass der erfindungsgemäße Rohrhalter 1 in diesem Ausführungsbeispiel im Wesentlichen bandförmig umlaufend ausgestaltet ist. Dabei ist die Höhe H der Verbindungsabschnitte 7 deutlich größer als die jeweilige Dicke D der Verbindungsabschnitte 7. Wie Fig. 1c) zeigt, entspricht im vorliegenden Fall die Höhe H beider Verbindungsabschnitte 7 der Höhe der Noppen 3.

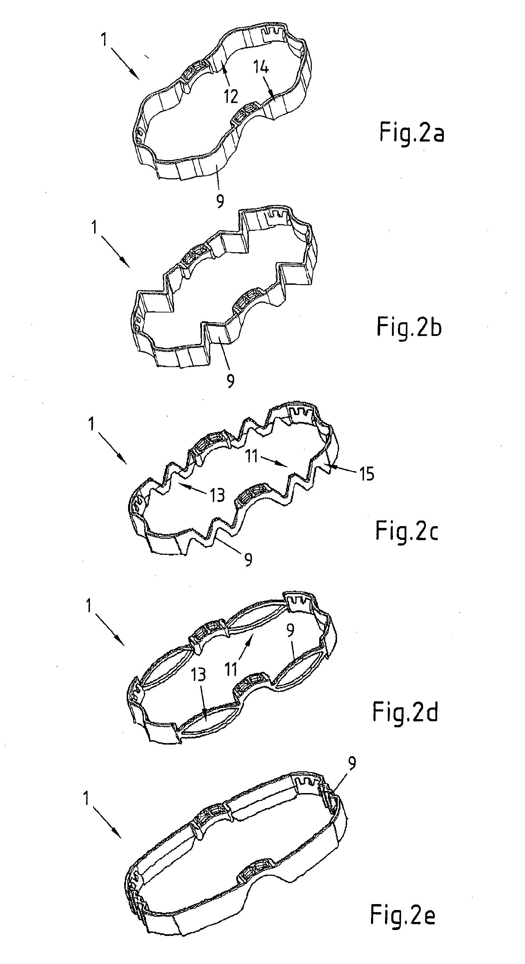

Die Figuren 2a) bis e) zeigen schließlich Ausführungsbeispiele eines Rohrhalters 1 in perspektivischer Ansicht, die nicht Gegenstand der Erfindung ist. Dabei unterscheiden sich diese Rohrhalter 1 gegenüber dem anhand der Figuren 1a) bis c) beschriebenen Rohrhalter 1 nur hinsichtlich der Anordnung und Ausbildung der Dehnungsabschnitte 9.

Bei den Figuren 2a) bis d) sind die Dehnungsabschnitte 9 jeweils zwischen einem der Anlageabschnitte 5 und einem der Halteabschnitte 8 bzw. -elemente 8a,8b angeordnet, wohingegen bei dem Ausführungsbeispiel in Fig. 2e) der Dehnungsabschnitt 9 Bestandteil des jeweiligen Anlageabschnitts 5 ist.

Fig. 2a) zeigt dabei einen in horizontaler Richtung wellenförmigen Verlauf der Dehnungsabschnitte 9.

Fig. 2b) zeigt einen in horizontaler Richtung zickzackförmigen Verlauf der Dehnungsabschnitte 9.

Fig. 2c) zeigt einen in vertikaler Richtung zickzackförmigen Verlauf der Dehnungsabschnitte 9, wobei hier eine Materialschwächung 11 in Form einer Querschnittsreduzierung 13 durch Materialwegnahme (Aussparungen) vorgesehen ist.

In Fig. 2d) ist ebenfalls eine Materialschwächung 11 in Form einer Querschnittsreduzierung 13 vorgesehen, wobei hier die Dehnungsabschnitte 9 jedoch aus zwei spiegelsymmetrisch zueinander verlaufenden gebogenen Armen bestehen, die ein Auge mit einer darin befindlichen Aussparung bilden.

In Fig. 2e) sind die Dehnungsabschnitte 9 in die Anlageabschnitte 5 integriert, wodurch eine Abstandsvergrößerung zwischen den beiden gegenüberliegenden Verbindungsabschnitten 7 des ringförmigen Rohrhalters 1 gegenüber einem unbelasteten Zustand erreicht werden kann, wenn der Rohrhalter 1 um zwei benachbarte Noppen 3 gelegt wird, die eine Vergrößerung der vom Rohrhalter umfassten Fläche gegenüber dem unbelasteten Zustand erfordern.

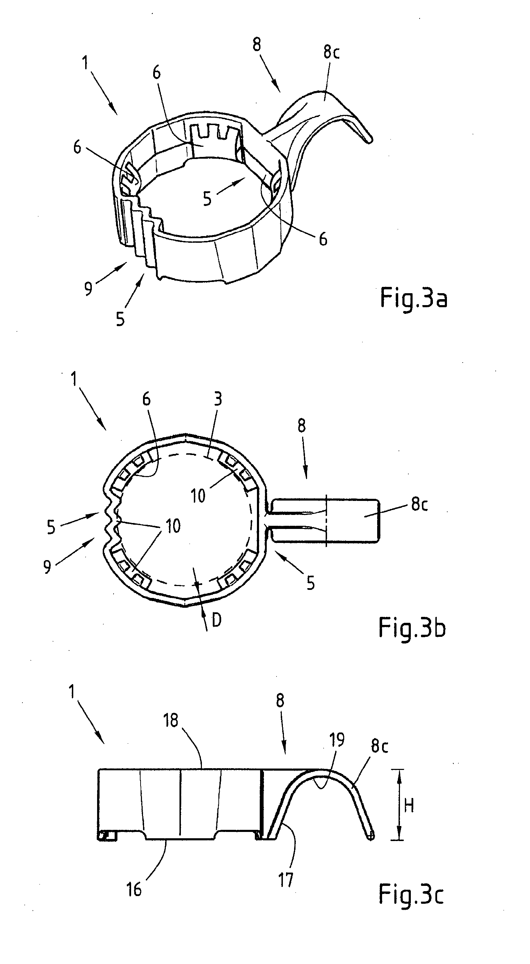

In den Figuren 3a) bis c) ist schließlich noch ein weiteres Ausführungsbeispiel eines Rohrhalters 1 dargestellt, das nicht Gegenstand der Erfindung ist. Dieser Rohrhalter 1 ist nicht, wie die zuvor beschriebenen Ausführungsbeispiele eines Rohrhalters, dafür ausgelegt, um zwei benachbarte Noppen 3 gelegt zu werden, sondern dieser Rohrhalter 1 soll nur eine einzige Noppe 3 umfassen, wobei sich ein Halteabschnitt 8 von einem ringförmigen Teil des Rohrhalters 1 radial nach außen erstreckt. Der Halteabschnitt 8 weist dabei ein Halteelement 8c auf, welches wie bei dem anhand der Figuren 1a) bis c) beschriebenen Ausführungsbeispiel ausgebildet ist und die Aufnahme eines Rohres 2 erlaubt.

Der Rohrhalter 1 weist zwei horizontal voneinander beabstandete Anlageabschnitte 5 und zwei horizontal voneinander beabstandete Verbindungsabschnitte 7, die die Anlageabschnitte 5 miteinander verbinden, auf, wobei die Anlageabschnitte 5 und Verbindungsabschnitte 7 eine Ringform bilden.

Auch bei dem Rohrhalter 1 gemäß dem Ausführungsbeispiel, welches in den Figuren 3a) bis c) dargestellt, ist ein Dehnungsabschnitt 9 vorgesehen, wobei der Dehnungsabschnitt 9 hier, ähnlich wie bei dem Ausführungsbeispiel in Fig. 2e), Bestandteil eines Anlageabschnitts 5 ist.

## Patentansprüche

1. Rohrhalter (1) zur Fixierung eines Rohres (2), insbesondere Wärmetauscherrohres, auf einer oberseitig hervorstehende Noppen (3) aufweisenden Platte (4), insbesondere Klimaplatte,
- mit zwei horizontal voneinander beabstandeten Anlageabschnitten (5) mit Anlageflächen (6) zur seitlichen Anlage an mindestens einer Noppe (3) der Platte (4),
- mit mindestens einem Verbindungsabschnitt (7), der die Anlageabschnitte (5) miteinander verbindet, und
- mit mindestens einem Halteabschnitt (8), der ein Halteelement (8a,8b,8c) zum Niederhalten des Rohres (2) aufweist,
**dadurch gekennzeichnet, dass**
mindestens einer der Anlageabschnitte (5)
und/oder
der mindestens eine Verbindungsabschnitt (7) oder mindestens einer der Verbindungsabschnitte (7)
mindestens einen lokal begrenzten Dehnungsabschnitt (9) aufweist, der eine Abstandsvergrößerung zwischen den Anlageabschnitten (5) gegenüber einem unbelasteten Zustand zulässt, in dem das Material des Dehnungsabschnitts (9) eine höhere Elastizität als in den dazu jeweils benachbarten Abschnitten aufweist und der so ausgebildet ist, dass er sich im Vergleich zu jeweils benachbarten Abschnitten leichter dehnen lässt oder überhaupt eine Dehnung zulässt, so dass der Abstand zwischen den Anlageabschnitten (5) und/oder Verbindungsabschnitten (7) auf unterschiedliche Noppenabstände und/oder Noppengrößen angepasst werden kann.

2. Rohrhalter (1), insbesondere Rohrhalter (1) nach Anspruch 1, zur Fixierung eines Rohres (2), insbesondere Wärmetauscherrohres, auf einer oberseitig hervorstehende Noppen (3) aufweisenden Platte (4), insbesondere Klimaplatte,
- mit zwei horizontal voneinander beabstandeten Anlageabschnitten (5) mit Anlageflächen (6) zur seitlichen Anlage an mindestens einer Noppe (3) der Platte (4) und
- mit mindestens einem Halteabschnitt (8), der ein Halteelement (8a,8b,8c) zum Niederhalten des Rohres (2) aufweist,
**dadurch gekennzeichnet, dass** der Rohrhalter (1) mindestens zwei Verbindungsabschnitte (7) aufweist, die die Anlageabschnitte (5) miteinander verbinden, und mindestens einer der Anlageabschnitte (5)
und/oder
mindestens einer der Verbindungsabschnitte (7)
mindestens einen lokal begrenzten Dehnungsabschnitt (9) aufweist, der eine Abstandsvergrößerung zwischen den Verbindungsabschnitten (7) gegenüber einem unbelasteten Zustand zulässt, in dem das Material des Dehnungsabschnitts (9) eine höhere Elastizität als in den dazu jeweils benachbarten Abschnitten aufweist und der so ausgebildet ist, dass er sich im Vergleich zu jeweils benachbarten Abschnitten leichter dehnen lässt oder überhaupt eine Dehnung zulässt, so dass der Abstand zwischen den Anlageabschnitten (5) und/oder Verbindungsabschnitten (7) auf unterschiedliche Noppenabstände und/oder Noppengrößen angepasst werden kann.

3. Rohrhalter (1) nach Anspruch 1 oder 2, **dadurch gekennzeichnet, dass** einer der Halteabschnitte (8) an mindestens einem der Verbindungsabschnitte (7) angeordnet ist.

4. Rohrhalter (1) nach einem der vorangehenden Ansprüche, **dadurch gekennzeichnet, dass** zwei Verbindungsabschnitte (7) vorgesehen sind, die horizontal voneinander beabstandet sind und jeweils die Anlageabschnitte (5) miteinander verbinden.

5. Rohrhalter (1) nach Anspruch 3 oder 4, **dadurch gekennzeichnet, dass** der Rohrhalter (1) zumindest abschnittsweise ringförmig ausgebildet ist, wobei der mindestens eine Dehnungsabschnitt (9) eine Vergrößerung der vom Rohrhalter umfassten Fläche gegenüber einem unbelasteten Zustand zulässt.

6. Rohrhalter (1) nach einem der vorangehenden Ansprüche, **dadurch gekennzeichnet, dass** der Dehnungsabschnitt (9) durch eine Materialschwächung (11) im Bereich des Dehnungsabschnitts (9) und/oder Materialversteifung (12) im Bereich benachbart zum Dehnungsabschnitt (9) gebildet wird, wobei der Dehnungsabschnitt (9) als Materialschwächung (11) insbesondere eine Querschnittsreduzierung (13) aufweist.

7. Rohrhalter (1) nach einem der vorangehenden Ansprüche, **dadurch gekennzeichnet, dass** der Dehnungsabschnitt (9) zumindest abschnittsweise einen in vertikaler Richtung oder horizontaler Richtung wellen- oder zickzackförmigen Verlauf hat.

8. Rohrhalter (1) nach einem der vorangehenden Ansprüche, **dadurch gekennzeichnet, dass** der Dehnungsabschnitt (9) zwischen einem der Anlageabschnitte (5) und einem der Halteabschnitte (8) liegt, wobei insbesondere zwischen jedem Anlageabschnitt (5) und jedem Halteabschnitt (8) ein Dehnungsabschnitt (9) angeordnet ist.

9. Rohrhalter (1) nach einem der vorangehenden Ansprüche, **dadurch gekennzeichnet, dass** der Dehnungsabschnitt (9) von einem der Anlageabschnitte (5) gebildet wird, wobei insbesondere jeder Anlageabschnitt (5) einen Dehnungsabschnitt (9) bildet.

10. Rohrhalter (1) nach einem der vorangehenden Ansprüche, **dadurch gekennzeichnet, dass** die Anlageabschnitte (5) nach innen weisende, insbesondere gewölbte, Vorsprünge (10) aufweisen.

11. Rohrhalter (1) nach einem der vorangehenden Ansprüche, **dadurch gekennzeichnet, dass** der mindestens eine Verbindungsabschnitt (7) im Bereich des Halteelements (8a,8b,8c) eine Querschnittsversteifung (14), insbesondere eine horizontale Querschnittsvergrößerung, aufweist.

12. Rohrhalter (1) nach einem der vorangehenden Ansprüche, **dadurch gekennzeichnet, dass** der mindestens eine Halteabschnitt (8) im Bereich des Halteelements (8a,8b,8c) eine zur Unterseite (16) des Rohrhalters (1) offene Aussparung (17) zur Aufnahme des Rohres (2) aufweist, die sich insbesondere zur Oberseite (18) des Rohrhalters (1) hin allmählich verengt, wobei die Aussparung (17) an der Oberseite (18) des Rohrhalters (1) vorzugsweise einen abgerundeten Abschluss (19) hat.

13. Rohrhalter (1) nach einem der vorangehenden Ansprüche, **dadurch gekennzeichnet, dass** der Rohrhalter (1) einen spiegelsymmetrischen Aufbau hat, bezogen auf eine durch die zwei Anlageabschnitte (5) verlaufende erste vertikale Spiegelebene (E₁) und/oder bezogen auf eine zur ersten vertikalen Spiegelebene (E₁) orthogonal verlaufende zweite vertikale Spiegelebene (E₂).

14. Rohrhalter (1) nach einem der vorangehenden Ansprüche, **dadurch gekennzeichnet, dass** die Höhe (H) des mindestens einen Verbindungsabschnitts (7) zumindest über einen Teil seiner Länge größer als seine Dicke (D) ist, wobei insbesondere zumindest abschnittsweise das Verhältnis von Höhe (H) zu Dicke (D) mindestens 2, bevorzugt mindestens 4, besonderes bevorzugt mindestens 6, beträgt.

15. Rohrhalter (1) nach einem der vorangehenden Ansprüche, **dadurch gekennzeichnet, dass** der Rohrhalter (1) einstückig ausgebildet ist.

16. Verbindungsanordnung für den Installationsbereich, insbesondere für einen Fußbodenheizungsaufbau,
- mit einer oberseitig hervorstehende Noppen (3) aufweisenden Platte (4), insbesondere Klimaplatte,
- mit einem Rohrhalter (1), der mindestens eine Noppe (3) umschließt, und
- mit einem Rohr (2), insbesondere Wärmetauscherrohr, das zwischen dem Rohrhalter (1) und der Platte (4) angeordnet ist,
**dadurch gekennzeichnet, dass** der Rohrhalter (1) nach einem der vorangehenden Ansprüche ausgebildet ist.

## Claims

1. A tube holder (1) for fixing a tube (2), in particular a heat exchanger tube, to a plate (4), in particular an air conditioner plate, which plate comprises studs (3) projecting at the top,
- with two contact sections (5), horizontally spaced apart from each other, with contact areas (6) for laterally resting against at least one stud (3) of the plate (4),
- with at least one connection section (7) that interconnects the contact sections (5), and
- with at least one holding section (8) comprising a holding element (8a, 8b, 8c) for holding down the tube (2),
**characterised in that**
at least one of the contact sections (5)
and/or
the at least one connection section (7) or at least one of the connection sections (7)
comprises at least one locally delimited elongation section (9) that allows an increase in the space between the contact sections (5) relative to an unloaded state in which the material of the elongation section (9) comprises higher elasticity than in the respective adjacent sections, and which elongation section (9) is designed in such a manner that in comparison to respective adjacent sections it can more easily be elongated or allows elongation at all so that the distance between the contact sections (5) and/or connection sections (7) can be adapted to different stud distances and/or stud sizes.

2. A tube holder (1), in particular the tube holder (1) according to claim 1, for fixing a tube (2), in particular a heat exchanger tube, to a plate (4), in particular an air conditioner plate, which plate (4) comprises studs (3) projecting at the top,
- with two contact sections (5), horizontally spaced apart from each other, with contact areas (6) for laterally resting against at least one stud (3) of the plate (4), and
- with at least one holding section (8) that comprises a holding element (8a, 8b, 8c) for holding down the tube (2),
**characterised in that** the tube holder (1) comprises at least two connection sections (7) that interconnect the contact sections (5), and
at least one of the contact sections (5)
and/or
at least one of the connection sections (7)
comprises at least one locally delimited elongation section (9) that allows an increase in the space between the contact sections (7) relative to an unloaded state in which the material of the elongation section (9) comprises higher elasticity than in the respective adjacent sections, and which elongation section (9) is designed in such a manner that in comparison to respective adjacent sections it can more easily be elongated or allows elongation at all so that the distance between the contact sections (5) and/or connection sections (7) can be adapted to different stud distances and/or stud sizes.

3. The tube holder (1) according to claim 1 or 2, **characterised in that** one of the holding sections (8) is arranged on at least one of the connection sections (7).

4. The tube holder (1) according to any one of the preceding claims, **characterised in that** two connection sections (7) are provided that are horizontally spaced apart from each other and in each case interconnect the contact sections (5).

5. The tube holder (1) according to claim 3 or 4, **characterised in that** the tube holder (1) is ringshaped, at least in some sections, wherein the at least one elongation section (9) allows an increase in the area encompassed by the tube holder when compared to an unloaded state.

6. The tube holder (1) according to any one of the preceding claims, **characterised in that** the elongation section (9) is formed by material weakening (11) in the region of the elongation section (9) and/or material stiffening (12) in the region adjacent to the elongation section (9), wherein the elongation section (9) comprises, in particular, a cross-section reduction (13) as material weakening (11).

7. The tube holder (1) according to any one of the preceding claims, **characterised in that** the elongation section (9) at least in some sections comprises an undulating shape or a zigzag shape in the vertical direction or in the horizontal direction.

8. The tube holder (1) according to any one of the preceding claims, **characterised in that** the elongation section (9) is situated between one of the contact sections (5) and one of the holding sections (8), wherein, in particular, between each contact section (5) and each holding section (8) an elongation section (9) is arranged.

9. The tube holder (1) according to any one of the preceding claims, **characterised in that** the elongation section (9) is formed by one of the contact sections (5), wherein, in particular, each contact section (5) forms an elongation section (9).

10. The tube holder (1) according to any one of the preceding claims, **characterised in that** the contact sections (5) comprise inwards-pointing, in particular curved, projections (10).

11. The tube holder (1) according to any one of the preceding claims, **characterised in that** the at least one connection section (7) in the region of the holding element (8a, 8b, 8c) comprises cross-sectional stiffening (14), in particular a horizontal increase in the cross section.

12. The tube holder (1) according to any one of the preceding claims, **characterised in that** the at least one holding section (8) in the region of the holding element (8a, 8b, 8c) comprises a recess (17) that is open towards the bottom (16) of the tube holder (1) for receiving the tube (2), which recess (17), in particular, gradually narrows towards the top (18) of the tube holder (1), wherein at the top (18) of the tube holder (1) the recess (17) preferably comprises a rounded finish (19).

13. The tube holder (1) according to any one of the preceding claims, **characterised in that** the tube holder (1) has a mirror-symmetrical design, relative to a first vertical mirror plane (E₁) that extends through the two contact sections (5), and/or relative to a second vertical mirror plane (E₂) that extends so as to be orthogonal to the first vertical mirror plane (E₁).

14. The tube holder (1) according to any one of the preceding claims, **characterised in that** the height (H) of the at least one connection section (7) at least along part of its length exceeds its thickness (D), wherein in particular at least in some sections the ratio of height (H) to thickness (D) is at least 2, preferably at least 4, particularly preferably at least 6.

15. The tube holder (1) according to any one of the preceding claims, **characterised in that** the tube holder (1) has been formed in one piece.

16. A connection arrangement for the plumbing sector, in particular for a floor heating construction,
- with a plate (4), in particular an air conditioner plate, which plate (4) comprises studs (3) projecting at the top,
- with a tube holder (1) that encompasses at least one stud (3), and
- with a tube (2), in particular a heat exchanger tube, arranged between the tube holder (1) and the plate (4),
**characterised in that** the tube holder (1) is designed according to any one of the preceding claims.

## Revendications

1. Support de tuyau (1) pour fixer un tuyau (2), en particulier un tuyau d'échangeur de chaleur, sur une plaque (4), en particulier une plaque climatique, présentant des bossages (3) en saillie sur le dessus,
- comprenant deux tronçons d'appui (5) écartés horizontalement l'un de l'autre comprenant des faces d'appui (6) pour l'appui latéral sur au moins un bossage (3) de la plaque (4),
- comprenant au moins un tronçon de liaison (7) qui relie entre eux les tronçons d'appui (5), et
- comprenant au moins un tronçon de fixation (8) qui présente un élément de fixation (8a, 8b, 8c) pour maintenir le tuyau (2) vers le bas,
**caractérisé en ce que**
au moins un des tronçons d'appui (5) et/ou
l'au moins un tronçon de liaison (7) ou au moins un des tronçons de liaison (7)
présente au moins un tronçon de dilatation (9) délimité localement qui permet un agrandissement de l'écart entre les tronçons d'appui (5) par rapport à un état non contraint, dans lequel le matériau du tronçon de dilatation (9) présente une élasticité plus élevée que dans les tronçons respectifs voisins de celui-ci et est ainsi conçu qu'il se dilate plus facilement en comparaison des tronçons voisins respectifs ou permet principalement une dilatation, de telle sorte que l'écart entre les tronçons d'appui (5) et/ou les tronçons de liaison (7) peut être adapté à différent(e)s écarts de bossages et/ou tailles de bossages.

2. Support de tuyau (1), en particulier support de tuyau (1) selon la revendication 1, pour fixer un tuyau (2), en particulier un tuyau d'échangeur de chaleur, sur une plaque (4), en particulier une plaque climatique, présentant des bossages (3) en saillie sur le dessus,
- comprenant deux tronçons d'appui (5) écartés horizontalement l'un de l'autre comprenant des faces d'appui (6) pour l'appui latéral sur au moins un bossage (3) de la plaque (4), et
- comprenant au moins un tronçon de fixation (8) qui présente un élément de fixation (8a, 8b, 8c) pour maintenir le tuyau (2) vers le bas,
**caractérisé en ce que** le support de tuyau (1) comprend au moins deux tronçons de liaison (7) qui relient entre eux les tronçons d'appui (5), et
au moins un des tronçons d'appui (5)
et/ou
au moins un des tronçons de liaison (7)
présente au moins un tronçon de dilatation (9) délimité localement qui permet un agrandissement de l'écart entre les tronçons de liaison (7) par rapport à un état non contraint, dans lequel le matériau du tronçon de dilatation (9) présente une élasticité plus élevée que dans les tronçons respectifs voisins de celui-ci et est ainsi conçu qu'il se dilate plus facilement en comparaison des tronçons voisins respectifs ou permet principalement une dilatation, de telle sorte que l'écart entre les tronçons d'appui (5) et/ou les tronçons de liaison (7) peut être adapté à différent(e)s écarts de bossages et/ou tailles de bossages.

3. Support de tuyau (1) selon la revendication 1 ou 2, **caractérisé en ce que** l'un des tronçons de fixation (8) est disposé sur au moins un des tronçons de liaison (7).

4. Support de tuyau (1) selon l'une des revendications précédentes, **caractérisé en ce que** deux tronçons de liaison (7) sont prévus, lesquels sont écartés horizontalement l'un de l'autre et relient respectivement les tronçons d'appui (5) entre eux.

5. Support de tuyau (1) selon la revendication 3 ou 4, **caractérisé en ce que** le support de tuyau (1) est annulaire au moins par tronçons, sachant que l'au moins un tronçon de dilatation (9) permet un agrandissement de la surface comprise par le support de tuyau par rapport à un état non contraint.

6. Support de tuyau (1) selon l'une des revendications précédentes, **caractérisé en ce que** le tronçon de dilatation (9) est formé par un affaiblissement de matériau (11) dans la partie du tronçon de dilatation (9) et/ou un renfort de matériau (12) dans la partie adjacente au tronçon de dilatation (9), sachant que le tronçon de dilatation (9) présente en particulier une réduction de section transversale (13) en tant qu'affaiblissement de matériau (11).

7. Support de tuyau (1) selon l'une des revendications précédentes, **caractérisé en ce que** le tronçon de dilatation (9) est ondulé ou en zig-zag au moins par tronçons dans le sens vertical ou le sens horizontal.

8. Support de tuyau (1) selon l'une des revendications précédentes, **caractérisé en ce que** le tronçon de dilatation (9) est placé entre un des tronçons d'appui (5) et un des tronçons de fixation (8), sachant qu'en particulier, un tronçon de dilatation (9) est disposé entre chaque tronçon d'appui (5) et chaque tronçon de fixation (8).

9. Support de tuyau (1) selon l'une des revendications précédentes, **caractérisé en ce que** le tronçon de dilatation (9) est formé par un des tronçons d'appui (5), sachant qu'en particulier, chaque tronçon d'appui (5) forme un tronçon de dilatation (9).

10. Support de tuyau (1) selon l'une des revendications précédentes, **caractérisé en ce que** les tronçons d'appui (5) présentent des saillies (10) orientées, en particulier bombées, vers l'intérieur.

11. Support de tuyau (1) selon l'une des revendications précédentes, **caractérisé en ce que** l'au moins un tronçon de liaison (7) présente un renfort transversal (14), en particulier un agrandissement transversal horizontal, au niveau de l'élément de fixation (8a, 8b 8c).

12. Support de tuyau (1) selon l'une des revendications précédentes, **caractérisé en ce que** l'au moins un tronçon de fixation (8) présente au niveau de l'élément de fixation (8a, 8b, 8c), un évidement (17) ouvert en direction de la face inférieure (16) du tuyau (1) pour recevoir le tuyau (2), qui en particulier réduit graduellement en direction de la face supérieure (18) du support de tuyau (1), sachant que l'évidement (17) a de préférence une terminaison (19) arrondie sur la face supérieure (18) du tuyau (1).

13. Support de tuyau (1) selon l'une des revendications précédentes, **caractérisé en ce que** le support de tuyau (1) a une construction en vis-à-vis, rapporté à un premier plan de réflexion vertical (E₁) à travers les deux tronçons d'appui (5) et/ou rapporté à un second plan de réflexion vertical (E₂) qui est orthogonal au premier plan de réflexion vertical (E₁).

14. Support de tuyau (1) selon l'une des revendications précédentes, **caractérisé en ce que** la hauteur (H) de l'au moins un tronçon de liaison (7) est au moins plus grande que son épaisseur (D) sur au moins une partie de sa longueur, sachant qu'en particulier, par tronçons au moins, le rapport de la hauteur (H) à l'épaisseur (D) est au moins de 2, de préférence au moins de 4, particulièrement de préférence au moins de 6.

15. Support de tuyau (1) selon l'une des revendications précédentes, **caractérisé en ce que** le support de tuyau (1) est conçu d'un seul tenant.

16. Agencement de liaison pour le domaine de l'installation, en particulier pour un plancher chauffant,
- comprenant une plaque (4), en particulier une plaque climatique, présentant des bossages (3) en saillie sur le dessus,
- comprenant un support de tuyau (1) qui entoure au moins un bossage (3), et
- comprenant un tuyau (2), en particulier un tuyau d'échangeur de chaleur, qui est disposé entre le support de tuyau (1) et la plaque (4),
**caractérisé en ce que** le support de tuyau (1) est conçu selon l'une des revendications précédentes.
